# EUROPEAN PATENT APPLICATION

(11) **EP 4 098 352 A1**
(43) Date of publication of application: **07.12.2022**
(21) Application number: 21746322.3
(22) Date of filing: 14.01.2021
(51) Int. Cl.: B01D 69/00, B01D 69/10, B01D 69/12, B01D 71/30, B01D 71/34, B01D 71/64, B01D 71/68, D06M 15/63

(54) **FILTRATION FILTER, AND METHOD FOR PRODUCING SAME**

(30) Priority: 28.01.2020 JP 2020011393
(71) Applicant: Kabushiki Kaisha F.C.C., Hamamatsu-shi, Shizuoka 431-1394 (JP)
(72) Inventor: ONO Masatsugu, Hamamatsu-shi, Shizuoka 431-1304 (JP); TAKAGI Makoto, Hamamatsu-shi, Shizuoka 431-1304 (JP)
(74) Representative: Cohausz & Florack
(86) International application number: PCT/JP2021/001099
(87) International publication number: WO 2021/153255

(57) **Abstract**

Provided are a filtration filter that enables a porous resin to be firmly and consistently held on a support and that increases the amount of permeate while maintaining impurity rejection rate and a method for producing the filtration filter. Provided are a filtration filter capable of filtering out impurities and a method for producing the filtration filter which includes impregnating a support including a fibrous structure with a resin solution prepared by dissolving a predetermined resin in a predetermined solvent, and immersing the support in a nonsolvent liquid in order to replace the solvent included in the resin solution with the nonsolvent liquid and thereby integrally form a filtration membrane inside the support, the filtration membrane including a porous resin and being capable of filtering out impurities.

## Description

### Technical Field

The present invention relates to a filtration filter capable of filtering out impurities and a method for producing the filtration filter.

### Background Art

For example, a microfiltration membrane, an ultrafiltration membrane, and the like are used for the water treatments performed in water purification plants, and a reverse osmosis membrane and the like are used in the water treatments for seawater desalination. Examples of a filtration filter that includes a microfiltration membrane or an ultrafiltration membrane include a filtration filter produced by uniformly applying a resin solution onto the surface of a support composed of PET nonwoven fabric or the like with a bar coater or the like and immersing the support in a nonsolvent liquid, such as water, in order to replace the solvent of the resin solution with the nonsolvent liquid by phase separation (NIPS process) and thereby form a porous resin on the surface of the support. An ultrafiltration membrane that includes a support and a porous resin (dense porous skin layer portion) disposed on the surface of the support is disclosed in, for example, PTL 1.

### Citation List

### Patent Literature

PTL 1: Japanese Unexamined Patent Application Publication No. H9-299772

### Summary of Invention

### Technical Problem

In the above related art, since a porous resin is formed on the surface of a support, it may be difficult to firmly and consistently hold the porous resin on the support. Furthermore, in the filtration filter known in the related art, since it is difficult to increase the number of openings (opening ratio) of the porous resin while maintaining the size of the openings, it is difficult to increase the amount of permeate while maintaining impurity rejection rate.

The present invention was made in light of the above circumstances. The present invention provides a filtration filter that enables the porous resin to be firmly and consistently held on the support and that increases the amount of permeate while maintaining impurity rejection rate and a method for producing the filtration filter. Solution to Problem

The invention described in Claim 1 is a filtration filter capable of filtering out impurities, the filtration filter including: a support composed of a fibrous structure; and a filtration membrane integrally formed inside the support, the filtration membrane including a porous resin and being capable of filtering out impurities.

The invention described in Claim 2 is based on the filtration filter described in Claim 1, wherein the filtration membrane includes a porous resin membrane having an opening ratio of 6% to 30%.

The invention described in Claim 3 is based on the filtration filter described in Claim 1 or 2, wherein the support includes a structure having a thickness of 0.03 to 0.5 mm.

The invention described in Claim 4 is based on the filtration filter described in any one of Claims 1 to 3, wherein the filtration membrane includes a porous resin having a thickness of 10 to 500 µm.

The invention described in Claim 5 is based on the filtration filter described in any one of Claims 1 to 4, wherein the support includes a structure including chemical fibers.

The invention described in Claim 6 is based on the filtration filter described in Claim 5, wherein the support includes an aramid resin or a polyethylene terephthalate resin.

The invention described in Claim 7 is based on the filtration filter described in any one of Claims 1 to 6, wherein the filtration membrane includes polysulfone (PSF), polyvinylidene fluoride (PVDF), polyethersulfone (PES), polyimide (PI), polyvinyl chloride (PVC), or cellulose acetate (CA).

The invention described in Claim 8 is a method for producing a filtration filter capable of filtering out impurities, the method including impregnating a support composed of a fibrous structure with a resin solution prepared by dissolving a predetermined resin in a predetermined solvent, and immersing the support in a nonsolvent liquid in order to replace the solvent included in the resin solution with the nonsolvent liquid and thereby integrally form a filtration membrane inside the support, the filtration membrane including a porous resin and being capable of filtering out impurities.

The invention described in Claim 9 is based on the method for producing a filtration filter described in Claim 8, wherein the filtration membrane includes a porous resin membrane having an opening ratio of 6% to 30%.

The invention described in Claim 10 is based on the method for producing a filtration filter described in Claim 8 or 9, wherein the support includes a structure having a thickness of 0.03 to 0.5 mm.

The invention described in Claim 11 is based on the method for producing a filtration filter described in any one of Claims 8 to 10, wherein the filtration membrane includes a porous resin having a thickness of 10 to 500 µm.

The invention described in Claim 12 is based on the method for producing a filtration filter described in any one of Claims 8 to 11, wherein the support includes a structure including chemical fibers.

The invention described in Claim 13 is based on the method for producing a filtration filter described in Claim 12, wherein the support includes an aramid resin or a polyethylene terephthalate resin.

The invention described in Claim 14 is based on the method for producing a filtration filter described in any one of Claims 8 to 13, wherein the filtration membrane includes polysulfone (PSF), polyvinylidene fluoride (PVDF), polyethersulfone (PES), polyimide (PI), polyvinyl chloride (PVC), or cellulose acetate (CA).

### Advantageous Effects of Invention

According to the present invention, the porous resin can be firmly and consistently held on the support. Furthermore, the amount of permeate can be increased while impurity rejection rate is maintained.

### Brief Description of Drawings

[Fig. 1] Fig. 1 is a flowchart illustrating a method for producing a filtration filter according to an embodiment of the present invention.
[Fig. 2] Fig. 2 is a schematic diagram illustrating a step for producing the filtration filter.
[Fig. 3] Fig. 3 is a schematic diagram illustrating a step for producing the filtration filter.
[Fig. 4] Fig. 4 is a schematic diagram illustrating a step for producing the filtration filter.
[Fig. 5] Fig. 5 is a schematic diagram illustrating a filtration filter of Example which is produced by the production method according to the embodiment.
[Fig. 6] Fig. 6 is a schematic diagram illustrating a filtration filter of Comparative Example which is produced by a production method known in the related art.
[Fig. 7] Fig. 7 is a table that lists the amount of permeate and rejection rate measured in each of Example and Comparative Example.
[Fig. 8] Fig. 8 is a micrograph of the inside structure of the filtration filter according to the embodiment of the present invention.
[Fig. 9] Fig. 9 includes (a) a micrograph of openings formed in the filtration filter and (b) a binary diagram of the micrograph.
[Fig. 10] Fig. 10 includes (a) a micrograph of openings formed in the filtration filter known in the related art and (b) a binary diagram of the micrograph. Description of Embodiments

An embodiment of the present invention is specifically described with reference to the drawings below.

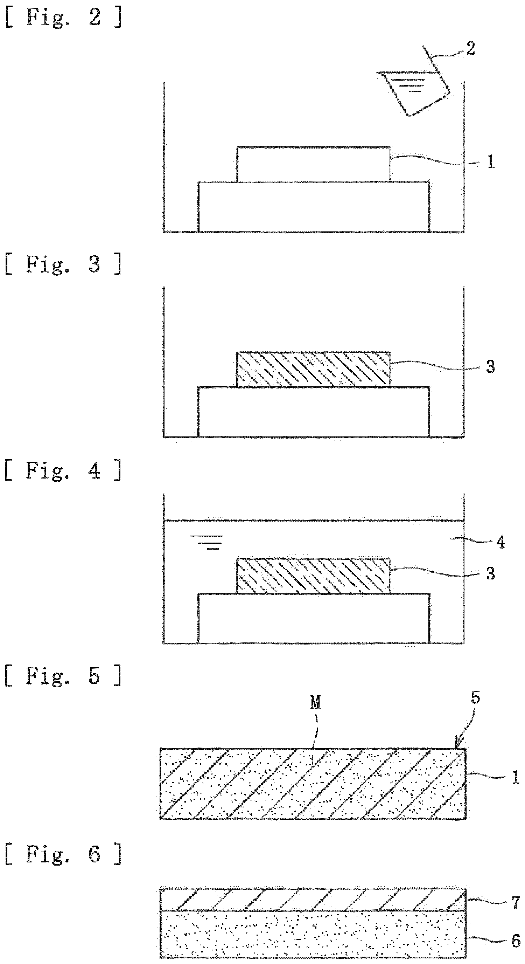

A filtration filter according to this embodiment is capable of separating and filtering out impurities from water and is a "UF membrane (or MF membrane)" capable of rejecting proteins, viruses, germs, and the like. The filtration filter 5 includes, as illustrated in Fig. 5, a support 1 the inside of which is a fibrous structure and a filtration membrane M integrally formed inside the support 1, which is composed of a porous resin and capable of filtering out impurities.

Specifically, the support 1 according to this embodiment is composed of nonwoven fabric or the like which is formed in the shape of a sheet (paper sheet) by a paper-making method (sheet-making method). The inside thereof is a fibrous (net-like) structure. The inside of the fibrous structure is impregnated with a porous resin such that they form a single piece. The support 1 according to this embodiment is composed of an aramid resin that has openings having a maximum pore size of about 270 µm. In this embodiment, in particular, the opening ratio is set to 6% to 30%.

An aramid resin (aromatic polyamide) is composed of a plastic that has excellent heat resistance and a high mechanical strength. For example, in the case where the porous resin is composed of polysulfone (PSF), hydrogen bonds are formed and is hydrophobic, which provides increased adherence (affinity). In contrast, in the case where the support 1 is composed of a PET resin (polyethylene terephthalate resin), pulp, or the like, hydrogen bonds are not formed between the support 1 and the porous resin, which is composed of polysulfone (PSF).

The filtration filter 5 according to this embodiment preferably includes a filtration membrane M that is composed of a porous resin and has an opening ratio of 6% to 30% and/or a thickness of 10 to 500 µm and a support 1 that has a thickness of 0.03 to 0.5 mm and/or is composed of a structure including chemical fibers. It is preferable that the support 1 according to this embodiment be composed of an aramid resin or a polyethylene terephthalate resin and the filtration membrane M be composed of polysulfone (PSF), polyvinylidene fluoride (PVDF), polyethersulfone (PES), polyimide (PI), polyvinyl chloride (PVC), or cellulose acetate (CA).

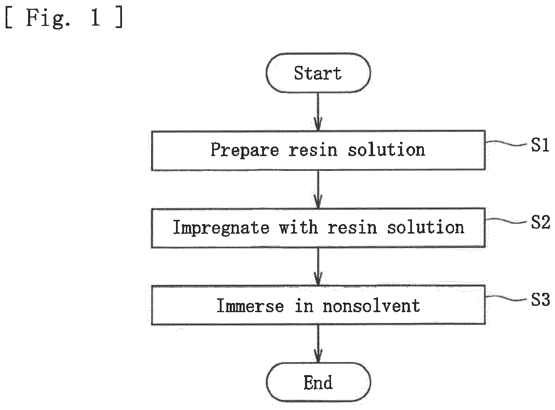

A method for producing the filtration filter according to this embodiment is described on the basis of the flowchart illustrated in Fig. 1 below.

Polysulfone is dissolved in methyl formamide to prepare a resin solution 2 (polymer solution)(S1). As illustrated in Figs. 2 and 3, a support 1 prepared by forming aramid fiber pulp in the shape of a paper sheet by a paper-making method is impregnated with the resin solution 2 to prepare a resin-impregnated body 3.

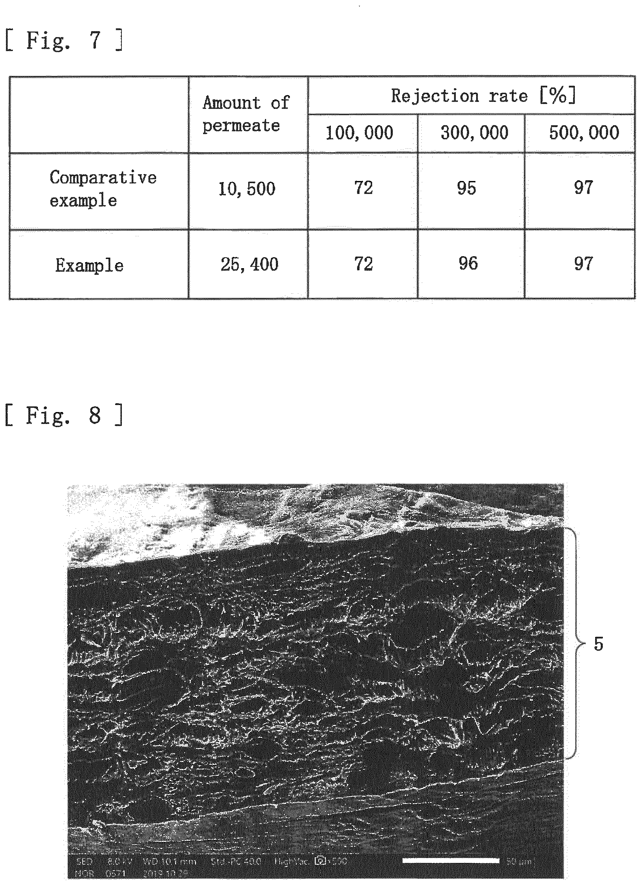

After the excess solution that remains on the surface has been removed with a bar coater, the resin-impregnated body 3 is immersed in a nonsolvent 4 (in this embodiment, water) as illustrated in Fig. 4 (S3). This causes a phase separation phenomenon in which the solvent of the resin solution 2 is replaced with the nonsolvent 4 (water). Consequently, a filtration filter 5 that includes a filtration membrane M integrally formed inside the support 1 which is composed of a porous resin and capable of filtering out impurities can be formed as illustrated in Figs. 5 and 8.

Specifically, the above-described membrane production method in which a phase separation phenomenon is used is referred to as "NIPS process". As a result of the solvent of the resin solution 2 being replaced with the nonsolvent 4 (water) by a phase separation phenomenon and the resin being solidified, the resin portion forms a filtration membrane M and the solvent portions replaced with water serve as pores (openings) of the filtration membrane M. The filtration filter 5 produced in the above-described manner includes a support 1 composed of aramid fibers and a filtration membrane M composed of polysulfone and is used as an ultrafiltration membrane (UF membrane).

In a filtration filter 5 produced in the above-described manner, the support 1 had a thickness of 0.15 mm. The filtration filter 5 had a total thickness of 0.30 mm, an average pore size of 0.026 µm, and an opening ratio of 9.0%. The term "opening ratio" used herein refers to the proportion of the area of the pore portions per unit area. The higher the opening ratio, the larger the amount of permeate. The term "amount of permeate" used herein refers to the amount of water that passes through the membrane per unit area, pressure, and time.

The filtration filter 5 produced in the above-described manner was used as Example and compared with Comparative Example. Comparative Example was a filtration filter that included a support 6 composed of PET (polyethylene terephthalate) fibers and a resin membrane 7 that was integrally formed on the surface of the support 6 and composed of polysulfone as illustrated in Fig. 6. The support 6 had a thickness of 0.1 mm. This filtration filter had a total thickness of 0.15 mm, an average pore size of 0.025 µm, and an opening ratio of 3.4%.

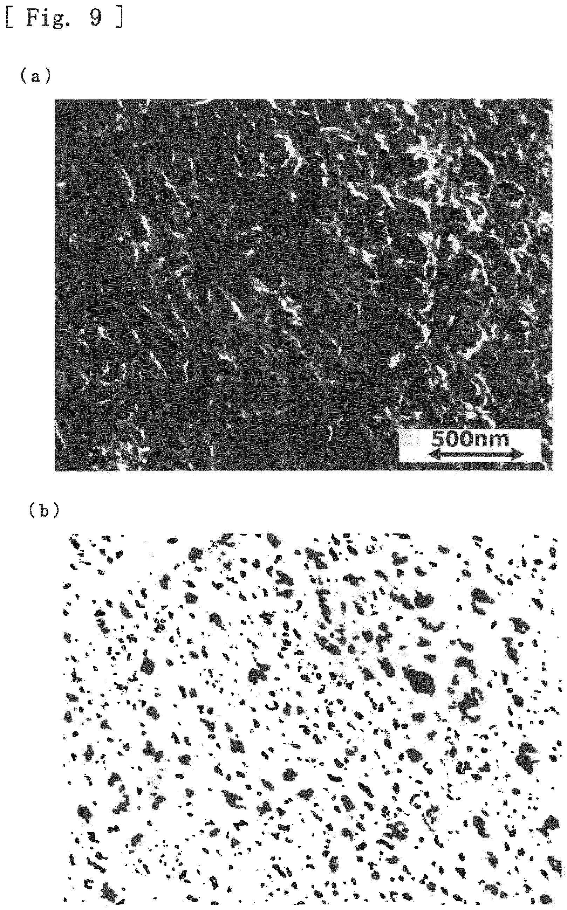

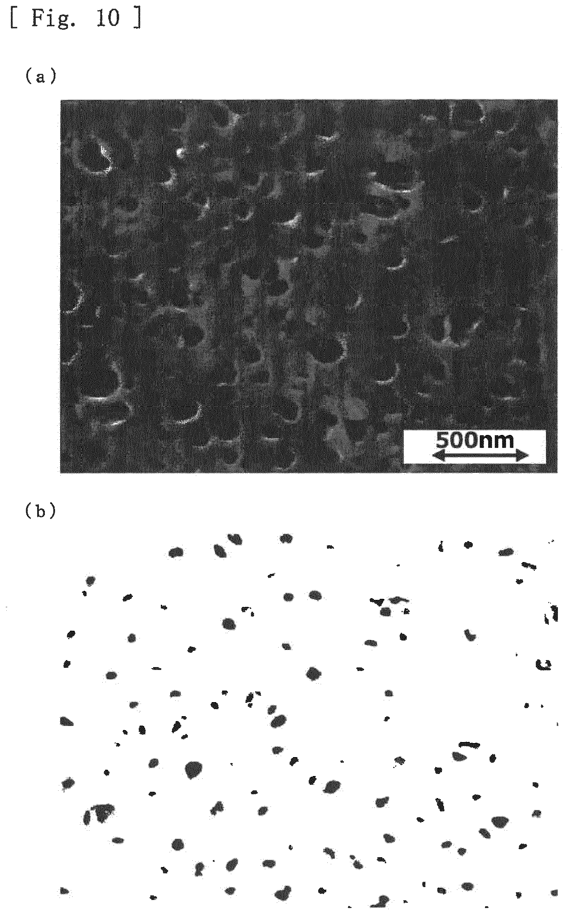

Specifically, although the average pore sizes of Example and Comparative Example were substantially the same, as illustrated in Fig. 9, Example had a larger number of openings than Comparative Example, that is, Example had a higher opening ratio than Comparative Example. On the other hand, as illustrated in Fig. 10, Comparative Example had a smaller number of openings than Example, that is, Comparative Example had a lower opening ratio than Example. Fig. 7 illustrates the test results of comparisons in impurity rejection rate (%) and the amount of permeate (L/(hour·m²·MPa) between Example and Comparative Example.

Note that the impurity rejection rate is determined by passing water containing PEG (reference material) having a predetermined molecular weight (100,000, 300,000, or 500,000) through the filtration membrane (resin membrane) and making a calculation using the following arithmetic expression: (Carbon content in raw water - Carbon content in permeate)/Carbon content in raw water. In this test, the concentration of the reference material (PEG concentration) is set to 2,000 ppm, the pressure (MPa) is set to 0.2, and the circulation time (min) is set to 10.

The test results show that, while the impurity rejection rate does not change greatly in either case where water containing PEG having a molecular weight of 100,000, 300,000, or 500,000 is used, the amount of permeate measured in Example is about two or more times that measured in Comparative Example and is markedly large. This is presumably because the opening ratio (9.0%) of Example is higher than the opening ratio (3.4%) of Comparative Example. The opening ratio can be determined by capturing an SEM image of the surface of the filtration filter at, for example, a 5,000 to 20,000-fold magnification and analyzing the image with image-processing software. The opening ratio may be determined by, for example, separating the opening portions from the other portions by binarization as illustrated in Figs. 9(b) and 10(b).

That is, the opening ratio of the filtration membrane (resin membrane) varies depending on the proportion of the resin portion and can be readily adjusted by changing the resin concentration. The pore size of the openings varies depending on the rate of phase separation and the rate at which the solvent is replaced with the nonsolvent and can be readily adjusted by changing the viscosity of the resin and the type and purity of the nonsolvent. Therefore, setting the above factors and conditions appropriately enables a filtration membrane having a high opening ratio to be produced while maintaining (without increasing) the pore size of the openings as in Example.

Thus, according to this embodiment, the porous resin can be firmly and consistently held on the support 1. In addition, the amount of permeate can be increased while the impurity rejection rate is maintained. Furthermore, in Example, since a fibrous structure (porous structure), such as an aramid resin, is used as a support and this support is impregnated with a resin solution and then immersed in a nonsolvent liquid in order to perform the phase replacement, the surface roughness of the fibrous structure is high and the surface tension thereof increases the area of contact between the solvent of the resin solution and the nonsolvent liquid. As a result, the rate at which the solvent is replaced with the nonsolvent can be increased.

Moreover, in Example, since a structure (porous structure) composed of an aramid resin or the like is used as a support and the filtration membrane is composed of polysulfone (PSF), adhesion to the filtration membrane is good and the occurrence of cracking and the like is reduced compared with the case where PET fibers, pulp, or the like is used as a support. Note that PET fibers or pulp may be used as a support when the occurrence of cracking and the like can be reduced.

In addition, in Comparative Example, if wrinkles are present in the support before the filtration membrane is formed on the support, the thickness of the filtration membrane is reduced at the protruded portions of the wrinkles and the thickness of the filtration membrane is increased at the recessed portions of the wrinkles, which results in unevenness in the thickness of the membrane. Furthermore, if large wrinkles are present, the support may be exposed and, consequently, the impurity filtration effect may become degraded. Therefore, in Comparative Example, it is necessary to cut both ends of the support, at which wrinkles are likely to occur. In contrast, in Example, even when wrinkles are present in the support, the filtration membrane can be formed inside the support in a suitable manner. Moreover, the structure can be flexibly changed.

The test results of ease of detachment of Example and Comparative Example are described below.

A tape (No. 3800K) produced by Nitto Denko CS System Corporation was put on the surface (membrane surface) of each of Example and Comparative Example. Each tape was rubbed three times by finger. Subsequently, while an end of the tape was held, the end of the tape was slowly pulled such that the tape was bent 180°. The region 25 mm behind the tape was considered as an effective area and the detachment of the filtration membrane (resin membrane) was observed. While detachment occurred at 100% in Comparative Example, detachment occurred at less than 100% (about 50%) in Example.

The above is the description of this embodiment. The present invention is not limited to this. For example, the support or the filtration membrane may be composed of another material. The thickness of the above members and the total thickness may be set appropriately. Although the inside of the support is entirely impregnated with the filtration membrane such that they are formed as a single piece in the filtration filter according to this embodiment, only a part of the support may be impregnated with the filtration membrane such that they are formed as a single piece.

Although, in this embodiment, the filtration filter is applied to an ultrafiltration membrane (UF membrane), the filtration filter may be applied to another filtration membrane, such as an MF membrane. Although the filtration membrane is formed by the NIPS process, in which the solvent of the resin solution is replaced with a nonsolvent, in the method for producing the filtration filter according to this embodiment, the filtration membrane may be formed by another method.

### Industrial Applicability

The present invention is also applicable to those having another structure or that are produced by another production method, as long as it is a filtration filter composed of a support including a fibrous structure and a filtration membrane integrally formed inside the support, the filtration membrane including a porous resin and being capable of filtering out impurities, and a method for producing the filtration filter.

### Reference Signs List

1 SUPPORT
2 RESIN SOLUTION
3 RESIN-IMPREGNATED BODY
4 NONSOLVENT
5 FILTRATION FILTER
6 SUPPORT
7 RESIN MEMBRANE

## Claims

1. A filtration filter capable of filtering out impurities, the filtration filter comprising:
a support composed of a fibrous structure; and
a filtration membrane integrally formed inside the support, the filtration membrane including a porous resin and being capable of filtering out impurities.

2. The filtration filter according to Claim 1, wherein the filtration membrane includes a porous resin membrane having an opening ratio of 6% to 30%.

3. The filtration filter according to Claim 1 or 2, wherein the support includes a structure having a thickness of 0.03 to 0.5 mm.

4. The filtration filter according to any one of Claims 1 to 3, wherein the filtration membrane includes a porous resin having a thickness of 10 to 500 µm.

5. The filtration filter according to any one of Claims 1 to 4, wherein the support includes a structure including chemical fibers.

6. The filtration filter according to Claim 5, wherein the support includes an aramid resin or a polyethylene terephthalate resin.

7. The filtration filter according to any one of Claims 1 to 6, wherein the filtration membrane includes polysulfone (PSF), polyvinylidene fluoride (PVDF), polyethersulfone (PES), polyimide (PI), polyvinyl chloride (PVC), or cellulose acetate (CA).

8. A method for producing a filtration filter capable of filtering out impurities, the method comprising:
impregnating a support composed of a fibrous structure with a resin solution prepared by dissolving a predetermined resin in a predetermined solvent, and
immersing the support in a nonsolvent liquid in order to replace the solvent included in the resin solution with the nonsolvent liquid and thereby integrally form a filtration membrane inside the support, the filtration membrane including a porous resin and being capable of filtering out impurities.

9. The method for producing a filtration filter according to Claim 8, wherein the filtration membrane includes a porous resin membrane having an opening ratio of 6% to 30%.

10. The method for producing a filtration filter according to Claim 8 or 9, wherein the support includes a structure having a thickness of 0.03 to 0.5 mm.

11. The method for producing a filtration filter according to any one of Claims 8 to 10, wherein the filtration membrane includes a porous resin having a thickness of 10 to 500 µm.

12. The method for producing a filtration filter according to any one of Claims 8 to 11, wherein the support includes a structure including chemical fibers.

13. The method for producing a filtration filter according to Claim 12, wherein the support includes an aramid resin or a polyethylene terephthalate resin.

14. The method for producing a filtration filter according to any one of Claims 8 to 13, wherein the filtration membrane includes polysulfone (PSF), polyvinylidene fluoride (PVDF), polyethersulfone (PES), polyimide (PI), polyvinyl chloride (PVC), or cellulose acetate (CA).
